(19) **Europäisches Patentamt / European Patent Office / Office européen des brevets**

(11) **EP 4 625 748 A1**

(12) **EUROPEAN PATENT APPLICATION**
published in accordance with Art. 153(4) EPC

(43) Date of publication:
01.10.2025 Bulletin 2025/40

(21) Application number: 23899838.9

(22) Date of filing: 28.11.2023

(51) International Patent Classification (IPC):
*H02J 3/50* (2006.01)     *H02J 3/16* (2006.01)

(86) International application number:
PCT/CN2023/134802

(87) International publication number:
WO 2024/120259 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.12.2022 CN 202211582365

(71) Applicant: Huawei Digital Power Technologies
Co., Ltd.
Shenzhen, Guangdong 518043 (CN)

(72) Inventors:
• ZHAO, Mingquan
  Shenzhen, Guangdong 518043 (CN)
• XIN, Kai
  Shenzhen, Guangdong 518043 (CN)
• LIU, Yunfeng
  Shenzhen, Guangdong 518043 (CN)
• XU, Fei
  Shenzhen, Guangdong 518043 (CN)
• QU, Zisen
  Shenzhen, Guangdong 518043 (CN)

(74) Representative: Maiwald GmbH
Engineering
Elisenhof
Elisenstrasse 3
80335 München (DE)

(54) **GRID-FORMING CONTROL METHOD FOR POWER CONVERTER, AND POWER CONVERTER**

(57) A grid-forming control method for a power converter is provided, and is used in the power converter. The power converter includes a conversion circuit, an input end of the conversion circuit is connected to a direct current source, an output end is connected to an electric power system. The power converter detects an output voltage of the conversion circuit, and when an amplitude of the output voltage exceeds a specified voltage range, controls the conversion circuit to output a first reactive power. The conversion circuit quickly supports a voltage of the electric power system by changing a manner of outputting a reactive power. The power converter calculates the reactive power based on an upper-limit voltage or a lower-limit voltage of the specified voltage range, and maximally supports the voltage of the electric power system, so that the electric power system operates within a normal voltage range. The power converter enables an upper-limit reactive power or a lower-limit reactive power to contend with an original reactive power, and outputs a contention reactive power. The power converter seamlessly switches between a voltage control mode and a reactive power control mode through contention, without affecting the electric power system.

FIG. 7

## Description

This application claims priority to Chinese Patent Application No. 202211582365.0, filed with the China National Intellectual Property Administration on December 9, 2022 and entitled "GRID-FORMING CONTROL METHOD FOR POWER CONVERTER AND POWER CONVERTER", which is incorporated herein by reference in its entirety.

## TECHNICAL FIELD

The present invention relates to the field of power electronics technologies, and in particular, to a grid-forming control method for a power converter and a power converter.

## BACKGROUND

In recent years, global temperature has been rising, making peak carbon emissions and carbon neutrality core tasks of important countries in the world to cope with climate change. To reduce carbon emissions, wide application of new energy and energy storage devices becomes a future development trend. Generally, energy in the new energy and energy storage devices cannot be directly used, and needs to be converted into electric energy for use by human. For example, a photovoltaic power generation system converts solar energy into electric energy, and a wind power generation system converts wind energy into electric energy.

In a process of constructing a new electric power system based on new energy, the new energy is a supply source of the electric power system, and coal power is downgraded to auxiliary energy. The new electric power system in the future is a system including a large proportion of power electronic devices. However, the new energy power electronic device of the new electric power system has strong fluctuation and weak support. Consequently, a voltage of the electric power system is likely to fluctuate, and safety and reliability of operation of the electric power system are greatly affected.

## SUMMARY

To resolve the foregoing problem, embodiments of this application provide a grid-forming control method for a power converter and a power converter. When a voltage of an electric power system fluctuates, the power converter can quickly support the voltage of the electric power system, and can maximally support the voltage of the electric power system, so that the power converter can operate within a normal voltage range. The power converter seamlessly switches between a voltage control mode and a reactive power control mode through contention, without affecting the electric power system.

Therefore, the following technical solutions are used in embodiments of this application.

According to a first aspect, an embodiment of this application provides a grid-forming control method for a power converter, used in the power converter. The power converter includes a conversion circuit, an input end of the conversion circuit is configured to connect to a direct current source, an output end is configured to connect to an electric power system, and the method includes: detecting an output voltage at the output end of the conversion circuit; and when an amplitude of the output voltage is greater than an upper-limit voltage of a specified voltage range or less than a lower-limit voltage of the specified voltage range, controlling the conversion circuit to output a first reactive power. The upper-limit voltage is a maximum voltage value within the specified voltage range, the lower-limit voltage is a minimum voltage value within the specified voltage range, and the first reactive power is a reactive power that enables the amplitude of the output voltage at the output end of the conversion circuit to be within the specified voltage range.

In this implementation, after determining that the amplitude of the output voltage at the output end of the conversion circuit exceeds the specified voltage range, the power converter may control the conversion circuit to output the corresponding reactive power based on the specified voltage range. The power converter quickly supports a voltage of the electric power system in a reactive power manner. In addition, the power converter calculates the reactive power based on the upper-limit voltage or the lower-limit voltage of the specified voltage range, and maximally supports the voltage of the electric power system, so that the electric power system can operate within a normal voltage range.

In an implementation, when the amplitude of the output voltage is greater than the upper-limit voltage of the specified voltage range or less than the lower-limit voltage of the specified voltage range, the controlling the conversion circuit to output a first reactive power includes: calculating an upper-limit reactive power based on the upper-limit voltage, and calculating a lower-limit reactive power based on the lower-limit voltage; selecting a contention reactive power based on a relationship between the upper-limit reactive power, the lower-limit reactive power, and an upper-level scheduled reactive power, where the contention reactive power is one of the upper-limit reactive power, the lower-limit reactive power, and the upper-level scheduled reactive power; and controlling, based on the contention reactive power, the conversion circuit to output the first reactive power.

In this implementation, the power converter enables the upper-limit reactive power or the lower-limit reactive power to contend with the upper-level scheduled reactive power, and outputs the contention reactive power. The power converter seamlessly switches between a voltage control mode and a reactive power control mode through contention, without affecting the electric power system.

In an implementation, the calculating an upper-limit reactive power based on the upper-limit voltage includes: when the amplitude of the output voltage is greater than the upper-limit voltage, calculating a second reactive power based on the upper-limit voltage; and limiting an amplitude of a voltage corresponding to the second reactive power, and calculating the upper-limit reactive power.

In this implementation, when determining that the voltage of the electric power system is greater than the upper-limit voltage of the specified voltage range, the power converter may calculate, based on the upper-limit voltage, the reactive power that supports the stable voltage of the electric power system. In this way, the power converter supports the voltage of the electric power system by outputting the reactive power.

In an implementation, the calculating a lower-limit reactive power based on the lower-limit voltage includes: when the amplitude of the output voltage is less than the lower-limit voltage, calculating a third reactive power based on the lower-limit voltage; and limiting an amplitude of a voltage corresponding to the third reactive power, and calculating the lower-limit reactive power.

In this implementation, when determining that the voltage of the electric power system is less than the lower-limit voltage of the specified voltage range, the power converter may calculate, based on the lower-limit voltage, the reactive power that supports the stable voltage of the electric power system. In this way, the power converter supports the voltage of the electric power system by outputting the reactive power.

In an implementation, the selecting a contention reactive power based on a relationship between the upper-limit reactive power, the lower-limit reactive power, and an upper-level scheduled reactive power includes: selecting a smaller reactive power from the upper-limit reactive power and the upper-level scheduled reactive power as an upper-limit contention reactive power; and selecting a larger reactive power from the upper-limit contention reactive power and the lower-limit reactive power as the contention reactive power.

In an implementation, the selecting a contention reactive power based on a relationship between the upper-limit reactive power, the lower-limit reactive power, and an upper-level scheduled reactive power includes: selecting a larger reactive power from the lower-limit reactive power and the upper-level scheduled reactive power as a lower-limit contention reactive power; and selecting a smaller reactive power from the lower-limit contention reactive power and the upper-limit reactive power as the contention reactive power.

In an implementation, the method further includes: when the amplitude of the output voltage is within the specified voltage range, controlling the conversion circuit to output the upper-level scheduled reactive power.

In this implementation, when the power converter determines that the voltage of the electric power system exceeds the specified voltage range, it indicates that the voltage of the electric power system fluctuates greatly. The power converter performs a voltage control function, and outputs the reactive power to the electric power system to support the voltage.

In an implementation, the method further includes: when time in which the amplitude of the output voltage of the conversion circuit is at the upper-limit voltage or the lower-limit voltage exceeds first specified time, maintaining a value of the contention reactive power unchanged.

In this implementation, when it is determined that the time in which the amplitude of the output voltage is stable at the upper-limit voltage or the lower-limit voltage exceeds the first specified time, the power converter may freeze the output contention reactive power. In this way, the electric power system maintains stable operation. In addition, the power converter can avoid a cross current between a plurality of power converters due to voltage control.

In an implementation, the method further includes: when time in which the amplitude of the output voltage of the conversion circuit is at the upper-limit voltage or the lower-limit voltage exceeds second specified time, controlling the conversion circuit to output the upper-level scheduled reactive power, or controlling the conversion circuit to output another reactive power according to a preset function. The second specified time is greater than the first specified time.

In this implementation, after the time in which the power converter outputs the voltage to support the electric power system exceeds the second specified time, the power converter does not enter the voltage control mode, and outputs the upper-level scheduled reactive power or the reactive power generated according to the preset function. This can avoid that a reactive power requirement of the electric power system is borne by a few power converters, resulting in a decrease in reliability of the power converters.

In an implementation, before the calculating an upper-limit reactive power based on the upper-limit voltage, and calculating a lower-limit reactive power based on the lower-limit voltage, the method further includes: detecting an output current at the output end of the conversion circuit; and when the output current is greater than a specified current threshold, obtaining a dynamic virtual impedance and a dynamic virtual impedance according to a preset function.

In this implementation, when great disturbance occurs in the voltage of the electric power system, the output current at the output end of the conversion circuit may be saturated. Consequently, control of the power converter is unstable. After the disturbance occurs in the electric power system, the power converter inputs the dynamic virtual impedance, to avoid the saturation of the power converter.

In an implementation, the controlling, based on the contention reactive power, the conversion circuit to output the first reactive power includes: controlling an amplitude of an inner potential based on the contention reactive power, where the amplitude of the inner potential is an amplitude of a voltage of an inner potential vector output by the power converter to support the voltage of the electric power system; and controlling a voltage of the inner potential of the power converter based on the amplitude of the inner potential, a phase of the inner potential, and a frequency of the inner potential, to enable the conversion circuit to output the first reactive power.

According to a second aspect, an embodiment of this application provides a power converter, including a conversion circuit and a controller. An input end of the conversion circuit is configured to connect a direct current source, and an output end is configured to connect an electric power system. The power converter is configured to convert direct current electric energy into alternating current electric energy under control of the control apparatus. The controller is configured to: obtain an output voltage at the output end of the conversion circuit; and when an amplitude of the output voltage is greater than an upper-limit voltage of a specified voltage range or less than a lower-limit voltage of the specified voltage range, control the conversion circuit to output a first reactive power. The upper-limit voltage is a maximum voltage value within the specified voltage range, the lower-limit voltage is a minimum voltage value within the specified voltage range, and the first reactive power is a reactive power that enables the amplitude of the output voltage at the output end of the conversion circuit to be within the specified voltage range.

In an implementation, the controller is specifically configured to: calculate an upper-limit reactive power based on the upper-limit voltage, and calculate a lower-limit reactive power based on the lower-limit voltage; select a contention reactive power based on a relationship between the upper-limit reactive power, the lower-limit reactive power, and an upper-level scheduled reactive power, where the contention reactive power is one of the upper-limit reactive power, the lower-limit reactive power, and the upper-level scheduled reactive power; and control, based on the contention reactive power, the conversion circuit to output the first reactive power.

In an implementation, that the controller calculates an upper-limit reactive power based on the upper-limit voltage includes: when the amplitude of the output voltage is greater than the upper-limit voltage, calculating a second reactive power based on the upper-limit voltage; and limiting an amplitude of a voltage corresponding to the second reactive power, and calculating the upper-limit reactive power.

In an implementation, that the controller calculates a lower-limit reactive power based on the lower-limit voltage includes: when the amplitude of the output voltage is less than the lower-limit voltage, calculating a third reactive power based on the lower-limit voltage; and limiting an amplitude of a voltage corresponding to the third reactive power, and calculating the lower-limit reactive power.

In an implementation, that the controller selects a contention reactive power based on a relationship between the upper-limit reactive power, the lower-limit reactive power, and an upper-level scheduled reactive power includes: selecting a smaller reactive power from the upper-limit reactive power and the upper-level scheduled reactive power as an upper-limit contention reactive power; and selecting a larger reactive power from the upper-limit contention reactive power and the lower-limit reactive power as the contention reactive power.

In an implementation, that the controller selects a contention reactive power based on a relationship between the upper-limit reactive power, the lower-limit reactive power, and an upper-level scheduled reactive power includes: selecting a larger reactive power from the lower-limit reactive power and the upper-level scheduled reactive power as a lower-limit contention reactive power; and selecting a smaller reactive power from the lower-limit contention reactive power and the upper-limit reactive power as the contention reactive power.

In an implementation, the controller is further configured to: when the amplitude of the output voltage is within the specified voltage range, control the conversion circuit to output the upper-level scheduled reactive power.

In an implementation, the controller is further configured to: when time in which the amplitude of the output voltage of the conversion circuit is at the upper-limit voltage or the lower-limit voltage exceeds first specified time, maintain a value of the contention reactive power unchanged.

In an implementation, the controller is further configured to: when time in which the amplitude of the output voltage of the conversion circuit is at the upper-limit voltage or the lower-limit voltage exceeds second specified time, control the conversion circuit to output the upper-level scheduled reactive power, or control the conversion circuit to output another reactive power according to a preset function. The second specified time is greater than the first specified time.

In an implementation, the controller is further configured to: detect an output current at the output end of the conversion circuit; and when the output current is greater than a specified current threshold, obtain a dynamic virtual impedance and a dynamic virtual impedance according to a preset function.

In an implementation, that the controller controls, based on the contention reactive power, the conversion circuit to output the first reactive power includes: controlling an amplitude of an inner potential based on the contention reactive power, where the amplitude of the inner potential is an amplitude of a voltage of an inner potential vector output by the power converter to support a voltage of the electric power system; and controlling a voltage of the inner potential of the power converter based on the amplitude of the inner potential, a phase of the inner potential, and a frequency of the inner potential, to enable the conversion circuit to output the first reactive power.

According to a third aspect, an embodiment of this application provides a grid-tied electric power system, including a new energy component and/or an energy storage system, and at least one power converter according to the possible implementations of the second aspect. An input end of the power converter is connected to the new energy component and/or the energy storage system, an output end of the power converter is configured to connect to the electric power system, and the converter is configured to convert a direct current of the new energy component and/or the energy storage system into an alternating current of the electric power system.

According to a fourth aspect, an embodiment of this application provides a computer-readable storage medium. The computer-readable storage medium stores a computer program. When the computer program is executed in a computer, the computer is enabled to perform the possible implementations of the first aspect.

According to a fifth aspect, an embodiment of this application provides a computer program product. The computer program product stores instructions, and when the instructions are executed by a computer, the computer is enabled to implement the possible implementations of the first aspect.

## BRIEF DESCRIPTION OF DRAWINGS

The following briefly describes the accompanying drawings used in descriptions of embodiments or the conventional technology.

FIG. 1 is a diagram of an architecture of a grid-tied electric power system according to an embodiment of this application;
FIG. 2 is a diagram of an architecture of a power converter according to an embodiment of this application;
FIG. 3 is a diagram of an architecture of a controller according to an embodiment of this application;
FIG. 4 is a diagram of a control objective and control effect of a controller according to an embodiment of this application;
FIG. 5 is a diagram of a control objective and control effect of a controller according to an embodiment of this application;
FIG. 6 is a diagram of a control objective and control effect of a controller according to an embodiment of this application; and
FIG. 7 is a schematic flowchart of a grid-forming control method for a power converter according to an embodiment of this application.

## DESCRIPTION OF EMBODIMENTS

The following describes the technical solutions in embodiments of this application with reference to the accompanying drawings in embodiments of this application.

In descriptions of this application, orientations or location relationships indicated by terms "center", "upper", "lower", "front", "rear", "left", "right", "vertical", "horizontal", "top", "bottom", "inner", "outer", and the like are based on orientations or location relationships shown in the accompanying drawings, and are merely intended for ease of describing this application and simplifying descriptions, instead of indicating or implying that a specified apparatus or element needs to have a specific orientation, and be constructed and operated in the specific orientation. Therefore, this cannot be understood as a limitation on embodiments of this application.

In descriptions of this application, it should be noted that unless otherwise expressly specified and limited, terms "mount", "interconnect", and "connect" should be understood in a broad sense. For example, such terms may indicate a fixed connection, a detachable connection, an abutting connection, or an integral connection. Persons of ordinary skill in the art may understand specific meanings of the foregoing terms in this application based on specific cases.

In the descriptions of this application, the term "and/or" describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the descriptions of this application, the terms "first", "second", and the like are intended to distinguish between different objects but do not indicate a particular order of the objects. For example, a first response message, a second response message, and the like are used for distinguishing between different response messages, but are not used for describing a particular order of the response messages.

In embodiments of this application, a word like "in an embodiment" or "for example" is used for representing an example, an example illustration, or description. Any embodiment or design solution described as "in an embodiment" or "for example" in embodiments of this application is not to be construed as being more preferred or having more advantages than another embodiment or design solution. Exactly, use of the word like "in an embodiment" or "for example" is intended to present a related concept in a specific manner.

In the descriptions of this specification, specific features, structures, materials, or characteristics may be combined in a proper manner in any one or more embodiments or examples.

In a conventional electric power system, synchronous generators are connected in parallel at several main nodes of the electric power system. The synchronous generator can support a voltage of the electric power system, so that the electric power system can operate stably. In a new electric power system, a new energy power generation system gradually replaces the synchronous generator, and this becomes an irreversible trend. However, the new energy power generation system also has a large limitation. For example, a voltage support capability is limited. As a result, the new energy power generation system cannot completely replace the synchronous generator in terms of grid connection characteristics.

If a power electronic device replaces the synchronous generator, the power electronic device needs to have a capability, of supporting the electric power system, that matches the synchronous generator to ensure the stable operation of the new electric power system. In comparison with the synchronous generator, the power electronic device has a weaker overcurrent capability. However, the power electronic device also has advantages such as a fast response speed, flexible control, and a low price. The power electronic device can match the capability, of supporting the electric power system, of the synchronous generator by optimizing a control algorithm.

Kernels of conventional grid-following (grid-following) and grid-forming algorithms are controlling an output current. The power electronic device may provide power support for the electric power system in response to dynamics of the electric power system. However, the power electronic device needs to perform steps such as detecting the dynamics of the electric power system, delivering an instruction, and executing an instruction, to implement a function of supporting the electric power system.

A grid-forming (grid-forming) technology is an extremely potential grid-tied algorithm technology that is currently used to enable an electric power system including an ultra-high proportion of power electronic devices to operate stably. The grid-forming technology naturally has a capability of supporting the electric power system in terms of a control manner. A kernel of a grid-forming algorithm is controlling an output voltage. When disturbance occurs in a voltage of the electric power system, an inner potential of a converter remains unchanged instantaneously, so that the converter can naturally have the capability of supporting the electric power system. However, the power electronic device has a weak overcurrent capability. If the power electronic device is not controlled and optimized, the power electronic device is quickly protected, so that the power electronic device cannot support the voltage of the electric power system. Therefore, a control algorithm of the power electronic device needs to be optimized to improve the capability of supporting the voltage of the electric power system.

To resolve a problem that the existing power electronic device has the insufficient capability of supporting the voltage of the electric power system, embodiments of this application provide a grid-tied electric power system, a power converter, and a grid-forming control method for the power converter.

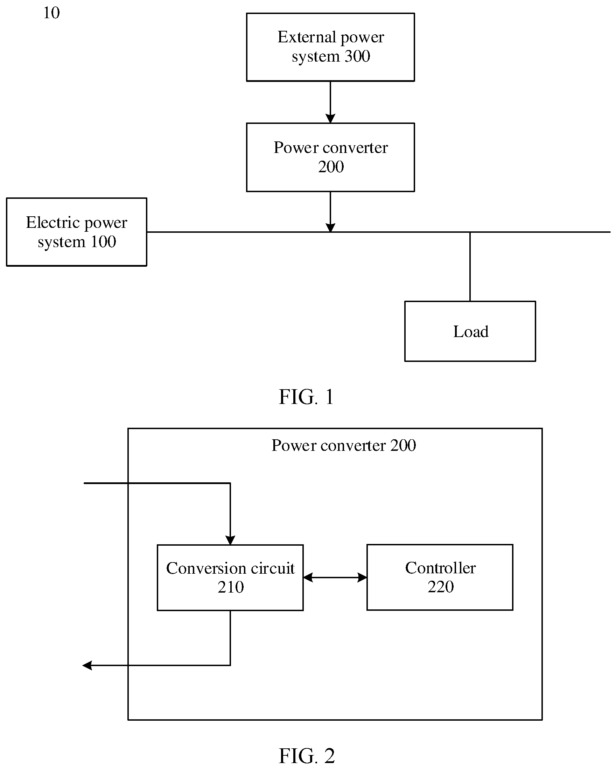

FIG. 1 is a diagram of an architecture of a grid-tied electric power system according to an embodiment of this application. As shown in FIG. 1, the grid-tied electric power system 10 includes an electric power system 100, at least one power converter 200, and at least one external power system 300. The at least one external power system 300 is coupled to the electric power system 100 via the at least one power converter 200.

The electric power system 100 may be a national electric power system, a home power grid, an enterprise power grid, or another alternating current electric power system. This is not limited herein in this application.

The power converter 200 may be an inverter, a converter, a modular multilevel converter, or another power converter. This is not limited in this application.

The external power system 300 may be a new energy system, for example, a photovoltaic power generation system, a wind power generation system, or another direct current electric power system. The new energy system includes new energy components such as a photovoltaic module and a windmill. The external power system 300 may be an energy storage system like a backup battery. This is not limited in this application.

In this application, the external power system 300 is connected in parallel to several main nodes of the electric power system 100 via the power converter 200, to support a voltage of the electric power system 100, thereby implementing stable operation of the electric power system 100.

FIG. 2 is a diagram of an architecture of a power converter according to an embodiment of this application. As shown in FIG. 2, the power converter 200 includes a conversion circuit 210 and a controller 220. One end of the conversion circuit 210 is electrically connected to the electric power system 100. The other end of the conversion circuit 210 is electrically connected to the external power system 300.

The conversion circuit 210 includes a bidirectional direct current/alternating current (direct current/alternating current, DC/AC) converter. The bidirectional DC/AC converter may convert an alternating current into a direct current, or convert a direct current into an alternating current. In this application, a voltage of the external power system 300 is a direct current. A voltage of the electric power system 100 is an alternating current. The conversion circuit 210 converts the direct current of the external power system 300 into an alternating current with a specified voltage value, and inputs the alternating current to the electric power system 100, to support the voltage of the electric power system 100. In another embodiment, the conversion circuit 210 may be another type of circuit, for example, an inverter circuit or a rectifier circuit. This is not limited herein in this application.

The controller 220 may be a digital signal processing (digital signal processing, DSP) unit, a field programmable gate array (field programmable gate array, FPGA), a microcontroller unit (microcontroller unit, MCU), or another device having a calculation and control function. In this application, the controller 220 is coupled to the conversion circuit 210, and is configured to receive an amplitude of an output voltage at an output end of the conversion circuit 210. When the amplitude of the output voltage is greater than an upper-limit voltage of a specified voltage range or less than a lower-limit voltage of the specified voltage range, the conversion circuit 210 is controlled to output a first reactive power. The power converter 200 outputs the first reactive power to the electric power system 100, so that the external power system 300 supports the voltage of the electric power system 100, thereby implementing stable operation of the electric power system 100.

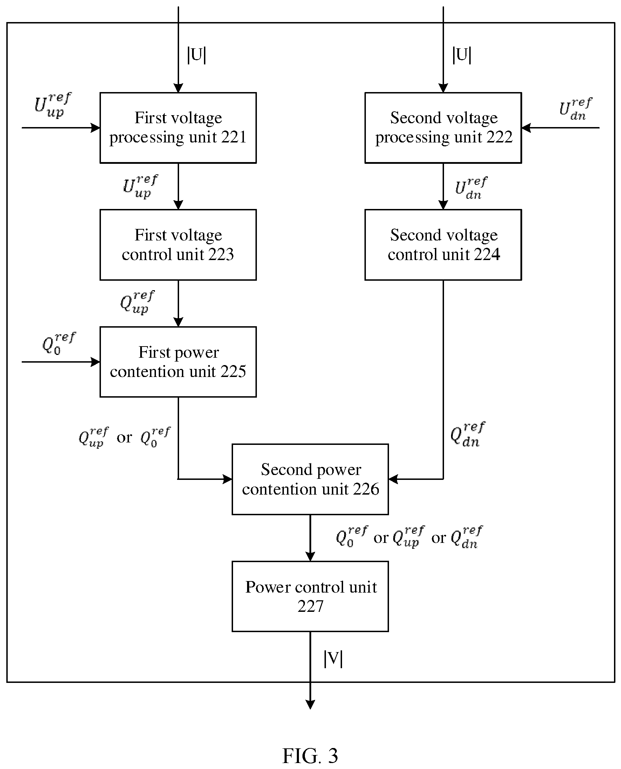

As shown in FIG. 3, the controller 220 may be divided into a first voltage processing unit 221, a second voltage processing unit 222, a first voltage control unit 223, a second voltage control unit 224, a first power contention unit 225, a second power contention unit 226, and a power control unit 227 based on executed functions. The first voltage processing unit 221, the second voltage processing unit 222, the first voltage control unit 223, the second voltage control unit 224, the first power contention unit 225, the second power contention unit 226, and the power control unit 227 may all be implemented by software, or may be implemented by hardware, or may be implemented by a combination of software and hardware.

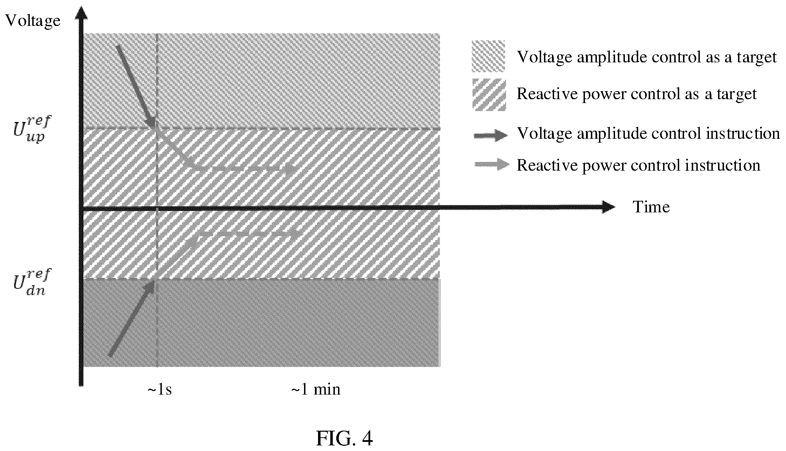

The following describes the technical solutions of this application by using the execution units of the controller 220 and with reference to a diagram of a control objective and control effect shown in FIG. 4.

The first voltage processing unit 221 is configured to receive the amplitude |U| of the output voltage at the output end of the conversion circuit 210 and an upper-limit voltage $U_{up}^{ref}$ stored in the controller 220. The first voltage processing unit 221 may determine a numerical relationship between the amplitude |U| of the output voltage and the upper-limit voltage $U_{up}^{ref}$ based on the amplitude |U| of the output voltage and the upper-limit voltage $U_{up}^{ref}$. The upper-limit voltage $U_{up}^{ref}$ is a maximum voltage value that does not affect normal operation of a load when the voltage of the electric power system 100 fluctuates.

The second voltage processing unit 222 is configured to receive the amplitude |U| of the output voltage at the output end of the conversion circuit 210 and a lower-limit voltage $U_{dn}^{ref}$ stored in the controller 220.

The second voltage processing unit 222 determines a numerical relationship between the amplitude |U| of the output voltage and the lower-limit voltage $U_{dn}^{ref}$ based on the amplitude |U| of the output voltage and the lower-limit voltage $U_{dn}^{ref}$. The lower-limit voltage $U_{dn}^{ref}$ is a minimum voltage value that does not affect normal operation of the load when the voltage of the electric power system 100 fluctuates.

In an embodiment, when the amplitude |U| of the output voltage is not greater than the upper-limit voltage $U_{up}^{ref}$ and is not less than the lower-limit voltage $U_{dn}^{ref}$, it indicates that an amplitude of the voltage of the electric power system 100 is within a normal voltage range. In this case, a voltage fluctuation of the electric power system 100 is small, and the power converter 200 may not need to additionally modify the reactive power output by the device, and preferentially perform a reactive power control function. The controller 220 may send an original reactive power $Q_0^{ref}$ to the power control unit 227.

Usually, when the power converter 200 provides voltage support for the electric power system 100, the power converter 200 outputs an active power Pe and a reactive power Qe to the electric power system 100. The active power Pe refers to alternating-current energy actually emitted or consumed per unit time. The reactive power Qe means that in an alternating current circuit with reactance, an electric field or a magnetic field absorbs energy from a power supply in a part of a period, and releases the energy in another part of the period. An average power in the entire period is zero, but the energy is constantly exchanged between the power supply and reactance elements (a capacitor and an inductor). A maximum exchange rate is the reactive power Qe. The active power Pe output by the power converter 200 can stabilize the voltage of the electric power system 100 within the specified range, and enable the load electrically connected to the electric power system 100 to operate normally. The reactive power Qe output by the power converter 200 can support the amplitude of the voltage of the electric power system 100, to implement reactive overvoltage support.

The original reactive power $Q_0^{ref}$ is an original reactive power instruction sent by an upper-level scheduling center like a power plant or a power grid company, so that the power converter 200 outputs the required reactive power to the electric power system 100.

In an embodiment, when the amplitude |U| of the output voltage is greater than the upper-limit voltage

$U_{up}^{ref}$ , it indicates that the amplitude of the voltage of the electric power system 100 exceeds the normal voltage range. In this case, the amplitude of the voltage of the electric power system 100 operates at a high abnormal operating level, and the power converter 200 needs to additionally modify the reactive power output by the device, to support the voltage of the electric power system 100. The first voltage processing unit 221 may enable the power converter 200 to preferentially perform a voltage control function, and enable the power converter 200 to output the reactive power. This can support the amplitude of the voltage of the electric power system 100, thereby supporting the voltage. The first voltage processing unit 221 may input the upper-limit voltage $U_{up}^{ref}$ to the first voltage control unit 223.

In an embodiment, when the amplitude |U| of the output voltage is less than the lower-limit voltage $U_{dn}^{ref}$ , it indicates that the amplitude of the voltage of the electric power system 100 exceeds the normal voltage range. In this case, the amplitude of the voltage of the electric power system 100 operates at a low abnormal operating level, and the power converter 200 needs to additionally modify the reactive power output by the device, to support the voltage of the electric power system 100. The second voltage processing unit 222 may enable the power converter 200 to preferentially perform a voltage control function, and enable the power converter 200 to output the reactive power. This can support the amplitude of the voltage of the electric power system 100, thereby supporting the voltage. The second voltage processing unit 222 may input the lower-limit voltage $U_{dn}^{ref}$ to the second voltage control unit 224.

In this application, the power converter 200 may determine whether the amplitude |U| of the output voltage of the conversion circuit 210 exceeds a fluctuation range of a specified voltage. If the amplitude |U| of the output voltage of the conversion circuit 210 exceeds the fluctuation range of the specified voltage, it indicates that the voltage of the electric power system 100 is unstable and the power converter 200 needs to support the voltage of the electric power system 100. If the amplitude |U| of the output voltage of the conversion circuit 210 does not exceed the fluctuation range of the specified voltage, it indicates that the voltage of the electric power system 100 is stable, and the power converter 200 can normally output the original reactive power $Q_0^{ref}$ to the electric power system 100.

The first voltage control unit 223 is configured to receive the upper-limit voltage $U_{up}^{ref}$ input by the first voltage processing unit 221. When the amplitude |U| of the output voltage is greater than the upper-limit voltage $U_{up}^{ref}$ , the first voltage control unit 223 may calculate an upper-limit reactive power $Q_{up}^{ref}$ , of the upper-limit voltage $U_{up}^{ref}$ based on the upper-limit voltage $U_{up}^{ref}$

In an embodiment, when receiving the upper-limit voltage $U_{up}^{ref}$ , the first voltage control unit 223 may convert the upper-limit voltage $U_{up}^{ref}$ into an upper-limit reactive power Q1 before amplitude limiting. The first voltage control unit 223 may limit an amplitude of the upper-limit voltage $U_{up}^{ref}$ based on parameters such as the upper-limit reactive power Q1 before amplitude limiting and the reactive power $Q_0^{ref}$ input by the power converter 200 when the amplitude of the voltage of the electric power system 100 is normal, to obtain an upper-limit reactive power after amplitude limiting, which is denoted as the upper-limit reactive power $Q_{up}^{ref}$ . The first voltage control unit 223 may send the upper-limit reactive power $Q_{up}^{ref}$ to the first power contention unit 225.

The second voltage control unit 224 is configured to receive the lower-limit voltage $U_{dn}^{ref}$ input by the second voltage processing unit 222. When the amplitude |U| of the output voltage is less than the lower-limit voltage $U_{dn}^{ref}$ , the second voltage control unit 224 may calculate the lower-limit reactive power $Q_{dn}^{ref}$ based on the lower-limit voltage $U_{dn}^{ref}$ .

In an embodiment, when receiving the lower-limit voltage $U_{dn}^{ref}$ , the second voltage control unit 224 may convert the lower-limit voltage $U_{dn}^{ref}$ into a lower-limit reactive power Q2 before amplitude limiting. The second voltage control unit 224 may limit an amplitude of the lower-limit voltage $U_{dn}^{ref}$ based on parameters such as the lower-limit reactive power Q2 before amplitude limiting and the reactive power $Q_0^{ref}$ input by the power converter 200 when the amplitude of the voltage of the electric power system 100 is normal, to obtain a lower-limit reactive power after amplitude limiting, which is denoted as the lower-limit reactive power $Q_{dn}^{ref}$. The second voltage control unit 224 may send the lower-limit reactive power $Q_{dn}^{ref}$ to the second power contention unit 226.

In this application, after receiving the upper-limit voltage $U_{up}^{ref}$ or the lower-limit voltage $U_{dn}^{ref}$, the power converter 200 may calculate, based on the upper-limit voltage $U_{up}^{ref}$ or the lower-limit voltage $U_{dn}^{ref}$, the reactive power that supports the stable voltage of the electric power system 100. In this way, the power converter 200 supports the voltage of the electric power system 100 by outputting the reactive power.

The first power contention unit 225 is configured to receive the upper-limit reactive power $Q_{up}^{ref}$ sent by the first voltage control unit 223 and the original reactive power $Q_0^{ref}$ stored by the controller 220. The first power contention unit 225 may enable the upper-limit reactive power $Q_{up}^{ref}$ to contend with the original reactive power $Q_0^{ref}$.

In an embodiment, when the first power contention unit 225 receives the upper-limit reactive power $Q_{up}^{ref}$, the first power contention unit 225 selects to output a smaller reactive power between the upper-limit reactive power $Q_{up}^{ref}$ and the original reactive power $Q_0^{ref}$ as an upper-limit contention reactive power $Q_{min}^{ref}$. When the upper-limit reactive power $Q_{up}^{ref}$ is greater than the original reactive power $Q_0^{ref}$, the first power contention unit 225 uses the original reactive power $Q_0^{ref}$ as the upper-limit contention reactive power $Q_{min}^{ref}$, and sends the original reactive power $Q_0^{ref}$ to the second power contention unit 226. In this case, the first power contention unit 225 may enable the power converter 200 to preferentially perform the reactive power control function. When the upper-limit reactive power $Q_{up}^{ref}$ is less than the original reactive power $Q_0^{ref}$, the first power contention unit 225 uses the upper-limit reactive power $Q_{up}^{ref}$ as the upper-limit contention reactive power $Q_{min}^{ref}$, and sends the upper-limit reactive power $Q_{up}^{ref}$ to the second power contention unit 226. In this case, the first power contention unit 225 may enable the power converter 200 to preferentially perform the voltage control function.

In an embodiment, when the first power contention unit 225 does not receive the upper-limit reactive power $Q_{up}^{ref}$, the first power contention unit 225 sends the original reactive power $Q_0^{ref}$ to the second power contention unit 226.

The second power contention unit 226 is configured to receive the lower-limit reactive power $Q_{dn}^{ref}$ sent by the second voltage control unit 224 and the upper-limit contention reactive power $Q_{min}^{ref}$ sent by the first power contention unit 225. The second power contention unit 226 may enable the lower-limit reactive power $Q_{dn}^{ref}$ to contend with the upper-limit contention reactive power $Q_{min}^{ref}$.

In an embodiment, when the second power contention unit 226 receives the lower-limit reactive power $Q_{dn}^{ref}$, the second power contention unit 226 selects to output a larger reactive power between the lower-limit reactive power $Q_{dn}^{ref}$ and the upper-limit contention reactive power $Q_{min}^{ref}$ as the lower-limit contention reactive power $Q_{max}^{ref}$. When the lower-limit reactive power $Q_{dn}^{ref}$ is greater than the upper-limit contention reactive power $Q_{min}^{ref}$, the second power contention unit 226 uses the lower-limit reactive power $Q_{dn}^{ref}$ as the lower-limit contention reactive power $Q_{max}^{ref}$, and sends the lower-limit reactive power $Q_{dn}^{ref}$ to the power control unit 227. In this case, the second power contention unit 226 may enable the power converter 200 to preferentially perform the voltage control function. When the lower-limit reactive power $Q_{dn}^{ref}$ is less than the upper-limit contention reactive power $Q_{min}^{ref}$, the second power contention unit 226 uses the upper-limit contention reactive power $Q_{min}^{ref}$ as the lower-limit contention reactive power $Q_{max}^{ref}$, and sends the upper-limit reactive power $Q_{up}^{ref}$ or the original reactive power $Q_0^{ref}$ to the power control unit 227. In this case, the second power contention unit 226 may enable the power converter 200 to preferentially perform the voltage control function or the reactive power control function.

In an embodiment, when the second power contention unit 226 does not receive the lower-limit reactive power $Q_{dn}^{ref}$, the second power contention unit 226 sends the upper-limit contention reactive power $Q_{min}^{ref}$ to the power control unit 227.

On the contrary, the first power contention unit 225 may be connected to the second voltage control unit 224 for use. The second power contention unit 226 may be connected to the first voltage control unit 223 and the first power contention unit 225 for use. In this case, the first power contention unit 225 is configured to receive the lower-limit reactive power $Q_{dn}^{ref}$ sent by the second voltage control unit 224 and the original reactive power $Q_0^{ref}$ stored by the controller 220. The first power contention unit 225 may enable the lower-limit reactive power $Q_{dn}^{ref}$ to contend with the original reactive power $Q_0^{ref}$.

In an embodiment, when the first power contention unit 225 receives the lower-limit reactive power $Q_{dn}^{ref}$, the first power contention unit 225 selects to output a larger reactive power between the lower-limit reactive power $Q_{dn}^{ref}$ and the original reactive power $Q_0^{ref}$ as the lower-limit contention reactive power $Q_{max}^{ref}$. When the lower-limit reactive power $Q_{dn}^{ref}$ is greater than the original reactive power $Q_0^{ref}$, the first power contention unit 225 uses the lower-limit reactive power $Q_{dn}^{ref}$ as the lower-limit contention reactive power $Q_{max}^{ref}$, and sends the lower-limit reactive power $Q_{dn}^{ref}$ to the second power contention unit 226. In this case, the first power contention unit 225 may enable the power converter 200 to preferentially perform the voltage control function. When the lower-limit reactive power $Q_{dn}^{ref}$ is less than the original reactive power $Q_0^{ref}$, the first power contention unit 225 uses the original reactive power $Q_0^{ref}$ as the lower-limit contention reactive power $Q_{max}^{ref}$, and sends the original reactive power $Q_0^{ref}$ to the second power contention unit 226. In this case, the first power contention unit 225 may enable the power converter 200 to preferentially perform the reactive power control function.

In an embodiment, when the first power contention unit 225 does not receive the lower-limit reactive power $Q_{dn}^{ref}$, the first power contention unit 225 sends the original reactive power $Q_0^{ref}$ to the second power contention unit 226.

The second power contention unit 226 is configured to receive the upper-limit reactive power $Q_{up}^{ref}$ sent by the first voltage control unit 223 and the lower-limit contention reactive power $Q_{max}^{ref}$ sent by the first power contention unit 225. The second power contention unit 226 may enable the upper-limit reactive power $Q_{up}^{ref}$ to contend with the lower-limit contention reactive power $Q_{max}^{ref}$.

In an embodiment, when the second power contention unit 226 receives the upper-limit reactive power $Q_{up}^{ref}$, the second power contention unit 226 selects to output a smaller reactive power between the upper-limit reactive power $Q_{up}^{ref}$ and the lower-limit contention reactive power $Q_{max}^{ref}$ as the upper-limit contention reactive power $Q_{min}^{ref}$. When the upper-limit reactive power $Q_{up}^{ref}$ is greater than the lower-limit contention reactive power $Q_{max}^{ref}$, the second power contention unit 226 uses the lower-limit contention reactive power $Q_{max}^{ref}$ as the upper-limit contention reactive power $Q_{min}^{ref}$, and sends the lower-limit reactive power $Q_{dn}^{ref}$ or the original reactive power $Q_0^{ref}$ to the power control unit 227. In this case, the second power contention unit 226 may enable the power converter 200 to preferentially perform the voltage control function or the reactive power control function. When the upper-limit reactive power $Q_{up}^{ref}$ is less than the lower-limit contention reactive power $Q_{max}^{ref}$, the second power contention unit 226 uses the upper-limit reactive power $Q_{up}^{ref}$ as the upper-limit contention reactive power $Q_{min}^{ref}$, and sends the upper-limit reactive power $Q_{up}^{ref}$ to the power control unit 227. In this case, the second power contention unit 226 may enable the power converter 200 to preferentially perform the voltage control function.

In an embodiment, when the second power contention unit 226 does not receive the upper-limit reactive power $Q_{up}^{ref}$, the second power contention unit 226 sends the lower-limit contention reactive power $Q_{max}^{ref}$ to the power control unit 227.

In this application, after receiving the upper-limit reactive power $Q_{up}^{ref}$ or the lower-limit reactive power $Q_{dn}^{ref}$, the power converter 200 enables the upper-limit reactive power $Q_{up}^{ref}$ or the lower-limit reactive power $Q_{dn}^{ref}$ to contend with the original reactive power $Q_0^{ref}$, and outputs a contention reactive power. The power converter 200 seamlessly switches between a voltage control mode and a reactive power control mode through contention, without affecting the electric power system 100.

The power control unit 227 is configured to receive the upper-limit reactive power $Q_{up}^{ref}$ of the first power contention unit 225, the lower-limit reactive power $Q_{dn}^{ref}$ of the second power contention unit 226, and the original reactive power $Q_0^{ref}$ stored by the controller 220. The power control unit 227 may calculate an amplitude |V| of an inner potential based on the upper-limit reactive power $Q_{up}^{ref}$, the lower-limit reactive power $Q_{dn}^{ref}$, or the original reactive power $Q_0^{ref}$.

In an embodiment, when the power control unit 227 receives the upper-limit reactive power $Q_{up}^{ref}$, the power control unit 227 may calculate the amplitude of the inner potential based on the upper-limit reactive power $Q_{up}^{ref}$. The controller 220 controls a pulse width modulation (pulse width modulation, PWM) signal based on the amplitude of the inner potential, a phase of the inner potential, and a frequency of the inner potential, to control the voltage at the output end of the conversion circuit 210. The controller 220 outputs the reactive power to the electric power system 100, so that the amplitude of the voltage of the electric power system 100 can be reduced, and a fluctuation amplitude of the voltage of the electric power system 100 can be reduced.

In an embodiment, when the power control unit 227 receives the lower-limit reactive power $Q_{dn}^{ref}$, the power control unit 227 may calculate the amplitude of the inner potential based on the lower-limit reactive power $Q_{dn}^{ref}$. The controller 220 controls a PWM signal based on the amplitude of the inner potential, a phase of the inner potential, and a frequency of the inner potential, to control the voltage at the output end of the conversion circuit 210. The controller 220 outputs the reactive power to the electric power system 100, so that the amplitude of the voltage of the electric power system 100 can be increased, and a fluctuation amplitude of the voltage of the electric power system 100 can be reduced.

In an embodiment, when the power control unit 227 receives the original reactive power $Q_0^{ref}$, the power control unit 227 may calculate the amplitude of the inner potential based on the original reactive power $Q_0^{ref}$. The controller 220 controls a PWM signal based on the amplitude of the inner potential, a phase of the inner potential, and a frequency of the inner potential, to control the voltage at the output end of the conversion circuit 210, so that the controller 220 normally outputs the reactive power to the electric power system 100.

In this embodiment of this application, the power converter 200 receives the amplitude of the output voltage at the output end of the conversion circuit 210, and determines whether the amplitude of the voltage of the electric power system is abnormal. When determining that the amplitude of the voltage of the electric power system 100 is abnormal, the power converter 200 may generate the reactive power based on a preset voltage range, and output the reactive power to the conversion circuit 210, to quickly support the voltage of the electric power system 100, and maximum the support on the voltage of the electric power system 100. In this way, the power converter 200 can operate within the normal voltage range. The power converter 200 seamlessly switches between a voltage control mode and a reactive power control mode through contention, without affecting the electric power system 100.

In this application, when the amplitude of the voltage of the electric power system 100 is restored from a large fluctuation to the normal voltage range, to prevent a few power converters 200 from being in the voltage control mode for long time, the power converters 200 freeze the contention reactive power after the electric power system 100 is restored to the normal range, and generate new reactive powers based on the original reactive power or according to a preset function to transition to a normal operating state.

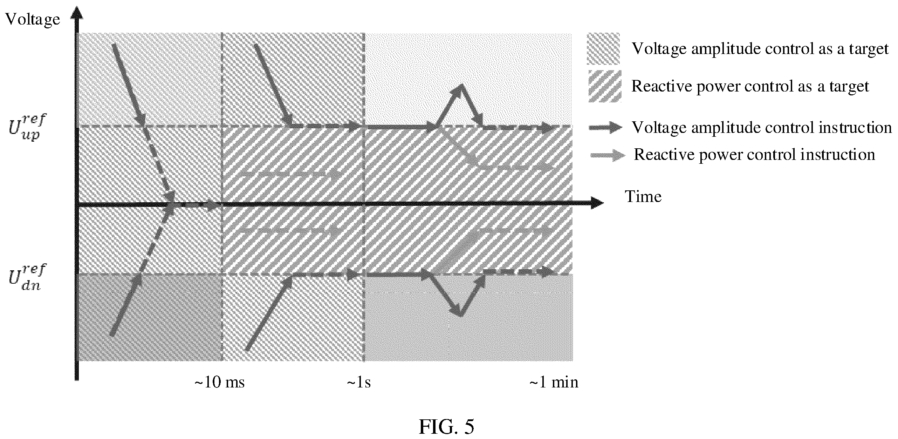

As shown in FIG. 5, the controller 220 receives the amplitude |U| of the output voltage at the output end of the conversion circuit 210 in real time. If the controller 220 determines that the amplitude |U| of the output voltage is between the upper-limit voltage $U_{up}^{ref}$ and the lower-limit voltage $U_{dn}^{ref}$, it indicates that the voltage of the electric power system 100 is supported, and the electric power system 100 can maintain stable operation. In an embodiment, when the controller 220 determines that time in which the amplitude |U| of the output voltage is stable at the upper-limit voltage $U_{up}^{ref}$ or the lower-limit voltage $U_{dn}^{ref}$ exceeds first specified time, the controller 220 may freeze an output contention reactive power Qe, so that the conversion circuit 210 keeps outputting the contention reactive power Qe. In this way, the electric power system 100 maintains stable operation. In addition, the controller 220 can avoid a cross current between a plurality of power converters 200 due to voltage control.

In an embodiment, when the controller 220 determines that time in which the amplitude |U| of the output voltage is stable at the upper-limit voltage $U_{up}^{ref}$ or the lower-limit voltage $U_{dn}^{ref}$ exceeds second specified time, the controller 220 may output the original reactive power $Q_0^{ref}$ or change, according to a preset function $f_2(t,Q)$, a contention reactive power Qe output by the controller 220. The controller 220 is enabled to output the original reactive power $Q_0^{ref}$ or a new reactive power $Q_1^{ref}$. After time in which the controller 220 outputs the voltage to support the electric power system 100 exceeds the second specified time, the controller 220 does not enter the voltage control mode, and outputs the original reactive power $Q_0^{ref}$ or the reactive power $Q_1^{ref}$ generated according to the preset function. This can avoid that a reactive power requirement of the electric power system 100 is borne by the few power converters 200, resulting in a decrease in reliability of the power converters 200.

In an embodiment, when the controller 220 determines that the amplitude |U| of the output voltage is greater than the upper-limit voltage $U_{up}^{ref}$ again or less than the lower-limit voltage $U_{dn}^{ref}$ again within second specified time, the controller 220 performs the technical solutions described in FIG. 3 and FIG. 3 again.

In this application, when great disturbance occurs in the voltage of the electric power system 100, the output current at the output end of the power converter 200 may be saturated. Consequently, control of the power converter 200 is unstable. Within about 10 ms after the disturbance occurs in the electric power system 100, the power converter 200 inputs a dynamic virtual impedance, to avoid the saturation of the power converter 200.

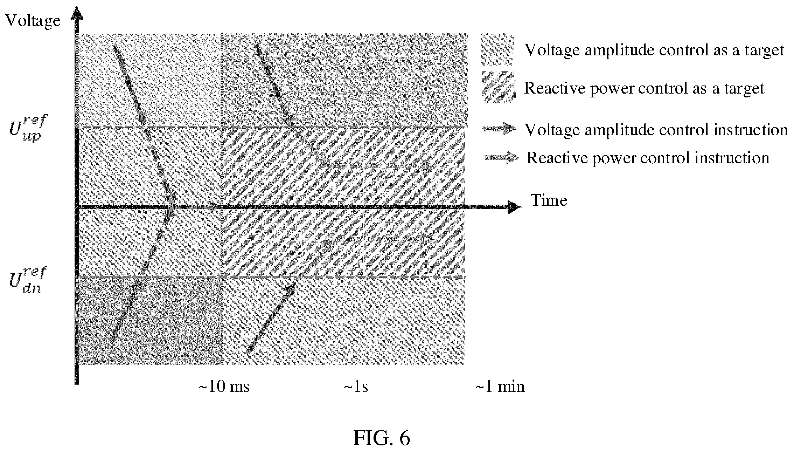

In an embodiment, as shown in FIG. 6, when an output current at the output end of the conversion circuit 210 of the power converter 200 exceeds a specified threshold, a virtual impedance X and a virtual resistor R may be obtained according to a preset function, an additional voltage instruction signal is calculated by using the virtual impedance X, the additional voltage instruction signal is input to a voltage control loop, and the virtual impedance and the virtual resistance may be changed in a transient state process. The virtual impedance and the virtual resistance increase as an amplitude of the output current increases, to ensure that voltage control is not saturated. In another embodiment, the preset function may be $f_1(I,X,R)$, where $f_1(I,X,R)$ is a preset function between an amplitude of a current, and the virtual impedance X and the virtual impedance R.

When the output current at the output end of the conversion circuit 210 of the power converter 200 decreases to be less than the specified threshold, a dynamic virtual impedance corresponding to the specified function is 0 or less than the specified threshold, and the controller 220 performs the technical solutions described in FIG. 3 and FIG. 3 again. When the dynamic virtual impedance corresponding to the specified function is a constant value, the controller 220 performs the technical solutions described in FIG. 3 and FIG. 3 again.

It should be specially noted that each unit of the controller 220 transmits reactive powers such as the original reactive power $Q_0^{ref}$, the upper-limit reactive power $Q_{up}^{ref}$, and the lower-limit reactive power $Q_{dn}^{ref}$ in a form of an instruction. For example, an original reactive power instruction is an instruction carrying the original reactive power $Q_0^{ref}$. The amplitude of the inner potential is transmitted in the form of an instruction.

In this application, the controller 220 controls the voltage at the output end of the conversion circuit 210 based on the amplitude of the inner potential, a phase of the output voltage at the output end of the conversion circuit 210, and a frequency of the output voltage at the output end of the conversion circuit 210, so that the conversion circuit outputs the reactive power. In an embodiment, the controller 220 further includes a first coordinate conversion unit, a voltage control unit, a current control unit, a second coordinate conversion unit, and a modulation unit. The first coordinate conversion unit receives parameters of the inner potential such as the amplitude of the inner potential, the frequency of the inner potential, and the phase of the inner potential, and converts the inner potential from a polar coordinate system into a rectangular coordinate system, to obtain an inner potential $U_{dq}^{ref}$. After receiving the inner potential $U_{dq}^{ref}$, the voltage control unit calculates a current $I_{dq}^{ref}$. After receiving the current $I_{dq}^{ref}$, the current control unit calculates a modulation voltage $E_{dq}^{ref}$ of a rotating coordinate system. The second coordinate conversion unit converts the modulation voltage $E_{dq}^{ref}$ from the rotating coordinate system to a stationary coordinate system, to obtain a modulation voltage $E_{abc}^{ref}$ of the stationary coordinate system. After obtaining the modulation voltage $E_{abc}^{ref}$ of the stationary coordinate system, the modulation unit generates a corresponding PWM signal. The controller 220 inputs the PWM signal to the conversion circuit 210, so that a power electronic component inside the conversion circuit 210 operates, to adjust the amplitude of the output voltage at the output end of the conversion circuit 210.

In another embodiment, the controller 220 further includes a first coordinate conversion unit, a second coordinate conversion unit, and a modulation unit. The first coordinate conversion unit receives parameters of the inner potential such as the amplitude of the inner potential, the frequency of the inner potential, and the phase of the inner potential, and converts the inner potential from a polar coordinate system into a rectangular coordinate system, to obtain a modulation voltage $E_{dq}^{ref}$. The second coordinate conversion unit converts the modulation voltage $E_{dq}^{ref}$ from a rotating coordinate system to a stationary coordinate system, to obtain a modulation voltage $E_{abc}^{ref}$ of the stationary coordinate system. After obtaining the modulation voltage $E_{abc}^{ref}$ of the stationary coordinate system, the modulation unit generates a corresponding PWM signal. The controller 220 inputs the PWM signal to the conversion circuit 210, so that a power electronic component inside the conversion circuit 210 operates, to adjust the amplitude of the output voltage at the output end of the conversion circuit 210.

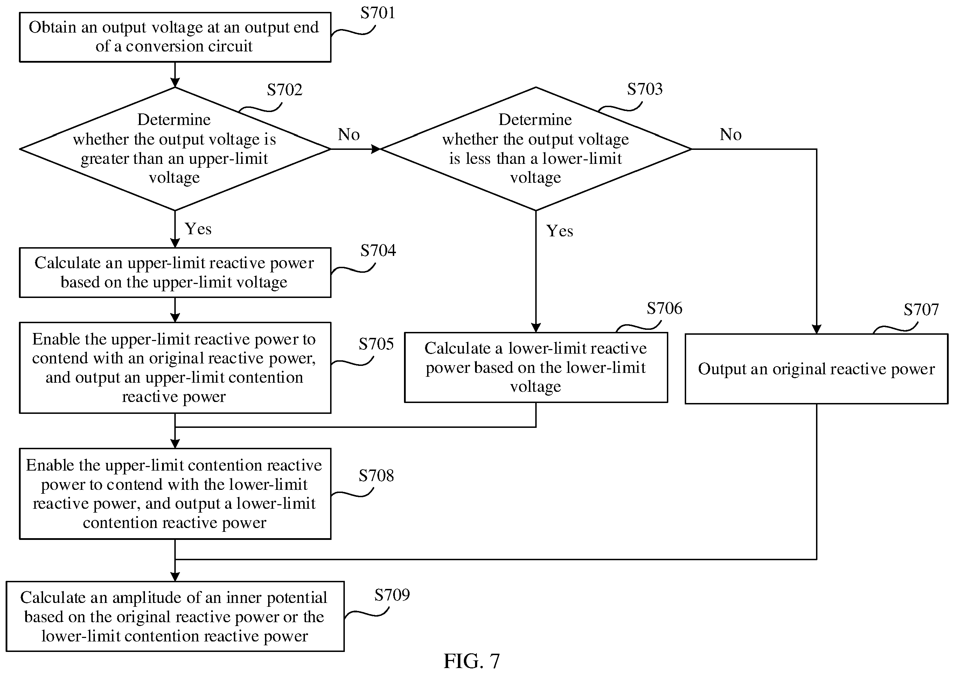

FIG. 7 is a schematic flowchart of a grid-forming control method for a power converter according to an embodiment of this application. As shown in FIG. 7, the method is performed by the controller 220 inside the power converter 200. A specific implementation process is as follows.

Step S701: The controller 220 obtains the amplitude |U| of the output voltage at the output end of the conversion circuit 210.

The controller 220 obtains the amplitude |U| of the output voltage at the output end of the conversion circuit 210. The amplitude |U| of the output voltage is the amplitude of the voltage of the electric power system 100. By obtaining the amplitude of the voltage of the electric power system 100, the controller 220 can detect an amplitude fluctuation of the voltage of the electric power system 100, thereby implementing control of the stable operation of the electric power system 100.

Step S702: The controller 220 determines whether the amplitude |U| of the output voltage is greater than the upper-limit voltage $U_{up}^{ref}$. When the amplitude |U| of the output voltage is not greater than the upper-limit voltage $U_{up}^{ref}$, step S703 is performed. When the amplitude |U| of the output voltage is greater than the upper-limit voltage $U_{up}^{ref}$, step S704 is performed.

Step S703: The controller 220 determines whether the amplitude |U| of the output voltage is less than the lower-limit voltage $U_{dn}^{ref}$. When the amplitude |U| of the output voltage is less than the lower-limit voltage $U_{dn}^{ref}$, step S706 is performed. When the amplitude |U| of the output voltage is not less than the lower-limit voltage $U_{dn}^{ref}$ , step S707 is performed.

After receiving the amplitude |U| of the output voltage of the conversion circuit 210, the processor 220 determines whether the amplitude |U| of the output voltage is greater than the upper-limit voltage $U_{up}^{ref}$ . In an embodiment, when the amplitude |U| of the output voltage is greater than the upper-limit voltage $U_{up}^{ref}$ , it indicates that the amplitude of the voltage of the electric power system 100 exceeds the normal voltage range. In this case, the amplitude of the voltage of the electric power system 100 operates at the high abnormal operating level, and the power converter 200 needs to additionally modify the reactive power output by the device, to support the voltage of the electric power system 100. The processor 220 may enable the power converter 200 to preferentially perform the voltage control function, and enable the power converter 200 to output the reactive power. This can support the amplitude of the voltage of the electric power system 100, thereby supporting the voltage.

When determining that the amplitude |U| of the output voltage is not greater than the upper-limit voltage $U_{up}^{ref}$ , the processor 220 determines whether the amplitude |U| of the output voltage is greater than the lower-limit voltage $U_{dn}^{ref}$ . In an embodiment, when the amplitude |U| of the output voltage is less than the lower-limit voltage $U_{dn}^{ref}$ , it indicates that the amplitude of the voltage of the electric power system 100 exceeds the normal voltage range. In this case, the amplitude of the voltage of the electric power system 100 operates at the low abnormal operating level, and the power converter 200 needs to additionally modify the reactive power output by the device, to support the voltage of the electric power system 100. The processor 220 may enable the power converter 200 to preferentially perform the voltage control function, and enable the power converter 200 to output the reactive power. This can support the amplitude of the voltage of the electric power system 100, thereby supporting the voltage.

In an embodiment, when the amplitude |U| of the output voltage is not greater than the upper-limit voltage $U_{up}^{ref}$ and is not less than the lower-limit voltage $U_{dn}^{ref}$ , it indicates that an amplitude of the voltage of the electric power system 100 is within the normal voltage range. In this case, the voltage fluctuation of the electric power system 100 is small, and the power converter 200 may not need to additionally modify the reactive power output by the device, and preferentially perform the reactive power control function. The processor 220 may enable the power converter 200 to send the original reactive power $Q_0^{ref}$ to the power control unit 227.

Step S704: The controller 220 calculates the upper-limit reactive power $Q_{up}^{ref}$ based on the upper-limit voltage $U_{up}^{ref}$ .

When receiving the upper-limit voltage $U_{up}^{ref}$ , the controller 220 may convert the upper-limit voltage $U_{up}^{ref}$ into the upper-limit reactive power Q1 before amplitude limiting. The controller 220 may limit the amplitude of the upper-limit voltage $U_{up}^{ref}$ based on the parameters such as the upper-limit reactive power Q1 before amplitude limiting and the reactive power $Q_0^{ref}$ input by the power converter 200 when the amplitude of the voltage of the electric power system 100 is normal, to obtain the upper-limit reactive power after amplitude limiting, which is denoted as the upper-limit reactive power $Q_{up}^{ref}$ .

Step S705: The controller 220 enables the upper-limit reactive power $Q_{up}^{ref}$ to contend with the original reactive power $Q_0^{ref}$ , and outputs the upper-limit contention reactive power $Q_{min}^{ref}$ .

When the controller 220 receives the upper-limit reactive power $Q_{up}^{ref}$ , the controller 220 selects to output the smaller reactive power between the upper-limit reactive power $Q_{up}^{ref}$ and the original reactive power $Q_0^{ref}$ as the upper-limit contention reactive power $Q_{min}^{ref}$ . In an embodiment, when the upper-limit reactive power $Q_{up}^{ref}$ is greater than the original reactive power $Q_0^{ref}$ , the controller 220 uses the original reactive power $Q_0^{ref}$ as the contention reactive power $Q_{min}^{ref}$ , so that the power converter 200 can preferentially perform the reactive power control function.

In an embodiment, when the upper-limit reactive power $Q_{up}^{ref}$ is less than the original reactive power $Q_0^{ref}$, the controller 220 uses the upper-limit reactive power $Q_{up}^{ref}$ as the upper-limit contention reactive power $Q_{min}^{ref}$, so that the power converter 200 can preferentially perform the voltage control function.

In an embodiment, when the controller 220 does not receive the upper-limit reactive power $Q_{up}^{ref}$, the controller 220 uses the original reactive power $Q_0^{ref}$ as the upper-limit contention reactive power $Q_{min}^{ref}$, so that the power converter 200 can preferentially perform the voltage control function. Step S706: The controller 220 calculates the lower-limit reactive power $Q_{dn}^{ref}$ based on the lower-limit voltage $U_{dn}^{ref}$.

When receiving the lower-limit voltage $U_{dn}^{ref}$, the controller 220 may convert the lower-limit voltage $U_{dn}^{ref}$ into the lower-limit reactive power Q2 before amplitude limiting. The controller 220 may limit the amplitude of the lower-limit voltage $U_{dn}^{ref}$ based on the parameters such as the lower-limit reactive power Q2 before amplitude limiting and the reactive power $Q_0^{ref}$ input by the power converter 200 when the amplitude of the voltage of the electric power system 100 is normal, to obtain the lower-limit reactive power after amplitude limiting, which is denoted as the lower-limit reactive power $Q_{dn}^{ref}$.

Step S707: The controller 220 outputs the original reactive power $Q_0^{ref}$.

Step S708: The controller 220 enables the lower-limit reactive power $Q_{dn}^{ref}$ to contend with the upper-limit contention reactive power $Q_{min}^{ref}$, and outputs the lower-limit contention reactive power $Q_{max}^{ref}$

When the controller 220 receives the lower-limit reactive power $Q_{dn}^{ref}$ and the upper-limit contention reactive power $Q_{min}^{ref}$, the controller 220 selects to output a larger reactive power between the lower-limit reactive power $Q_{dn}^{ref}$ and the upper-limit contention reactive power $Q_{min}^{ref}$ as the lower-limit contention reactive power $Q_{max}^{ref}$ In an embodiment, when the lower-limit reactive power $Q_{dn}^{ref}$ is greater than the upper-limit contention reactive power $Q_{min}^{ref}$, the controller 220 uses the lower-limit reactive power $Q_{dn}^{ref}$ as the lower-limit contention reactive power $Q_{max}^{ref}$, so that the power converter 200 can preferentially perform the voltage control function.

In an embodiment, when the lower-limit reactive power $Q_{dn}^{ref}$ is less than the upper-limit contention reactive power $Q_{min}^{ref}$, the controller 220 uses the upper-limit contention reactive power $Q_{min}^{ref}$ as the lower-limit contention reactive power $Q_{max}^{ref}$, so that the power converter 200 can preferentially perform the voltage control function or the reactive power control function.

In an embodiment, when the controller 220 does not receive the lower-limit reactive power $Q_{dn}^{ref}$, the controller 220 uses the upper-limit contention reactive power $Q_{min}^{ref}$ as the lower-limit contention reactive power $Q_{max}^{ref}$, so that the power converter 200 can preferentially perform the voltage control function or the reactive power control function.

Step S709: The controller 220 may calculate the amplitude |V| of the inner potential based on the original reactive power $Q_0^{ref}$ or the lower-limit contention reactive power $Q_{max}^{ref}$

When the controller 220 receives the upper-limit reactive power $Q_{up}^{ref}$ the controller 220 may calculate the amplitude of the inner potential based on the upper-limit reactive power $Q_{up}^{ref}$. The controller 220 controls the PWM signal based on the amplitude of the inner potential, the phase of the inner potential, and the frequency of the inner potential, to control the voltage at the output end of the conversion circuit 210. The controller 220 outputs the reactive power to the electric power system 100, so that the amplitude of the voltage of the electric power system 100 can be reduced, and the fluctuation amplitude of the voltage of the electric power system 100 can be reduced.

When the controller 220 receives the lower-limit reactive power $Q_{dn}^{ref}$, the controller 220 may calculate the amplitude of the inner potential based on the lower-limit reactive power $Q_{dn}^{ref}$. The controller 220 controls the PWM signal based on the amplitude of the inner potential, the phase of the inner potential, and the frequency of the inner potential, to control the voltage at the output end of the conversion circuit 210. The controller 220 outputs the reactive power to the electric power system 100, so that the amplitude of the voltage of the electric power system 100 can be increased, and the fluctuation amplitude of the voltage of the electric power system 100 can be reduced.

When the controller 220 receives the original reactive power $Q_0^{ref}$, the controller 220 may calculate the amplitude of the inner potential based on the original reactive power $Q_0^{ref}$. The controller 220 controls the PWM signal based on the amplitude of the inner potential, the phase of the inner potential, and the frequency of the inner potential, to control the voltage at the output end of the conversion circuit 210, so that the controller 220 normally outputs the reactive power to the electric power system 100.

When the controller 220 performs step S705 to step S708, the controller 220 preferentially enables the upper-limit reactive power $Q_{up}^{ref}$ to contend with the original reactive power $Q_0^{ref}$ and then enables the upper-limit contention reactive power $Q_{min}^{ref}$ to contend with the lower-limit reactive power $Q_{dn}^{ref}$ to obtain the lower-limit contention reactive power $Q_{max}^{ref}$. Optionally, the controller 220 may preferentially enable the lower-limit reactive power $Q_{dn}^{ref}$ to contend with the original reactive power $Q_0^{ref}$, and then enable the lower-limit contention reactive power $Q_{max}^{ref}$ to contend with the upper-limit reactive power $Q_{up}^{ref}$ to obtain the upper-limit contention reactive power $Q_{min}^{ref}$. Details are as follows:

The controller 220 receives the lower-limit reactive power $Q_{dn}^{ref}$, and enables the lower-limit reactive power $Q_{dn}^{ref}$ to contend with the original reactive power $Q_0^{ref}$. The controller 220 selects to output the larger reactive power between the lower-limit reactive power $Q_{dn}^{ref}$ and the original reactive power $Q_0^{ref}$ as the lower-limit contention reactive power $Q_{max}^{ref}$. In an embodiment, when the lower-limit reactive power $Q_{dn}^{ref}$ is greater than the original reactive power $Q_0^{ref}$, the controller 220 uses the lower-limit reactive power $Q_{dn}^{ref}$ as the lower-limit contention reactive power $Q_{max}^{ref}$, so that the power converter 200 can preferentially perform the voltage control function.

In an embodiment, when the lower-limit reactive power $Q_{dn}^{ref}$ is less than the original reactive power $Q_0^{ref}$, the controller 220 uses the original reactive power $Q_0^{ref}$ as the lower-limit contention reactive power $Q_{max}^{ref}$, so that the power converter 200 can preferentially perform the reactive power control function.

In an embodiment, when the controller 220 does not receive the lower-limit reactive power $Q_{dn}^{ref}$, the controller 220 uses the original reactive power $Q_0^{ref}$ as the lower-limit contention reactive power $Q_{max}^{ref}$, so that the power converter 200 can preferentially perform the reactive power control function.

When receiving the upper-limit reactive power $Q_{up}^{ref}$ and the lower-limit contention reactive power $Q_{max}^{ref}$, the controller 220 enables the upper-limit reactive power $Q_{up}^{ref}$ to contend with the lower-limit contention reactive power $Q_{max}^{ref}$. The controller 220 selects to output the smaller reactive power between the upper-limit reactive power $Q_{up}^{ref}$ and the lower-limit contention reactive power $Q_{max}^{ref}$ as the upper-limit contention reactive power $Q_{min}^{ref}$.

In an embodiment, when the upper-limit reactive power $Q_{up}^{ref}$ is greater than the lower-limit contention reactive power $Q_{max}^{ref}$, the controller 220 uses the lower-limit contention reactive power $Q_{max}^{ref}$ as the upper-limit contention reactive power $Q_{min}^{ref}$, so that the power converter 200 can preferentially perform the voltage control function or the reactive power control function.

In an embodiment, when the upper-limit reactive power $Q_{up}^{ref}$ is less than the lower-limit contention reactive power $Q_{max}^{ref}$, the controller 220 uses the upper-limit reactive power $Q_{up}^{ref}$ as the upper-limit contention reactive power $Q_{min}^{ref}$, so that the power converter 200 can preferentially perform the voltage control function.

In an embodiment, when the controller 220 does not receive the upper-limit reactive power $Q_{up}^{ref}$, the controller 220 uses the upper-limit reactive power $Q_{up}^{ref}$ as the upper-limit contention reactive power $Q_{min}^{ref}$, so that the power converter 200 can preferentially perform the voltage control function.

In this embodiment of this application, when the voltage of the electric power system fluctuates, the controller can quickly support the voltage of the electric power system, and can maximally support the voltage of the electric power system, so that the power converter can operate within the normal voltage range. Because voltage control and reactive power control are output through contention, the power converter seamlessly switches between the voltage control mode and the reactive power control mode, without affecting the electric power system.

An embodiment of this application further provides a computer program product including instructions. The computer program product may be a software or program product that includes instructions and that can run on a computing device or be stored in any usable medium. When the computer program product is run on at least one computing device, the at least one computing device is enabled to perform the grid-forming control method for the power converter.

An embodiment of this application further provides a computer-readable storage medium. The computer-readable storage medium may be any usable medium that can be stored by a computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct a computing device to perform the grid-forming control method for the power converter.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A grid-forming control method for a power converter, used in the power converter, wherein the power converter comprises a conversion circuit, an input end of the conversion circuit is configured to connect to a direct current source, an output end is configured to connect to an electric power system, and the method comprises:

    detecting an output voltage at the output end of the conversion circuit; and
    when an amplitude of the output voltage is greater than an upper-limit voltage of a specified voltage range or less than a lower-limit voltage of the specified voltage range, controlling the conversion circuit to output a first reactive power, wherein the upper-limit voltage is a maximum voltage value within the specified voltage range, the lower-limit voltage is a minimum voltage value within the specified voltage range, and the first reactive power is a reactive power that enables the amplitude of the output voltage at the output end of the conversion circuit to be within the specified voltage range.

2. The method according to claim 1, wherein when the amplitude of the output voltage is greater than the upper-limit voltage of the specified voltage range or less than the lower-limit voltage of the specified voltage range, the controlling the conversion circuit to output a first reactive power comprises:

calculating an upper-limit reactive power based on the upper-limit voltage, and calculating a lower-limit reactive power based on the lower-limit voltage;

selecting a contention reactive power based on a relationship between the upper-limit reactive power, the lower-limit reactive power, and an upper-level scheduled reactive power, wherein the contention reactive power is one of the upper-limit reactive power, the lower-limit reactive power, and the upper-level scheduled reactive power; and

controlling, based on the contention reactive power, the conversion circuit to output the first reactive power.

3. The method according to claim 2, wherein the calculating an upper-limit reactive power based on the upper-limit voltage comprises:

when the amplitude of the output voltage is greater than the upper-limit voltage, calculating a second reactive power based on the upper-limit voltage; and

limiting an amplitude of a voltage corresponding to the second reactive power, and calculating the upper-limit reactive power.

4. The method according to claim 2, wherein the calculating a lower-limit reactive power based on the lower-limit voltage comprises:

when the amplitude of the output voltage is less than the lower-limit voltage, calculating a third reactive power based on the lower-limit voltage; and

limiting an amplitude of a voltage corresponding to the third reactive power, and calculating the lower-limit reactive power.

5. The method according to claim 2, wherein the selecting a contention reactive power based on a relationship between the upper-limit reactive power, the lower-limit reactive power, and an upper-level scheduled reactive power comprises:

selecting a smaller reactive power from the upper-limit reactive power and the upper-level scheduled reactive power as an upper-limit contention reactive power; and

selecting a larger reactive power from the upper-limit contention reactive power and the lower-limit reactive power as the contention reactive power.

6. The method according to claim 2, wherein the selecting a contention reactive power based on a relationship between the upper-limit reactive power, the lower-limit reactive power, and an upper-level scheduled reactive power comprises:

selecting a larger reactive power from the lower-limit reactive power and the upper-level scheduled reactive power as a lower-limit contention reactive power; and

selecting a smaller reactive power from the lower-limit contention reactive power and the upper-limit reactive power as the contention reactive power.

7. The method according to any one of claims 1 to 6, further comprising:
when the amplitude of the output voltage is within the specified voltage range, controlling the conversion circuit to output the upper-level scheduled reactive power.

8. The method according to any one of claims 1 to 7, further comprising:
when time in which the amplitude of the output voltage of the conversion circuit is at the upper-limit voltage or the lower-limit voltage exceeds first specified time, maintaining a value of the contention reactive power unchanged.

9. The method according to claim 8, further comprising:
when time in which the amplitude of the output voltage of the conversion circuit is at the upper-limit voltage or the lower-limit voltage exceeds second specified time, controlling the conversion circuit to output the upper-level scheduled reactive power, or controlling the conversion circuit to output another reactive power according to a preset function, wherein the second specified time is greater than the first specified time.

10. The method according to any one of claims 2 to 9, wherein before the calculating an upper-limit reactive power based on the upper-limit voltage, and calculating a lower-limit reactive power based on the lower-limit voltage, the method further comprises:

detecting an output current at the output end of the conversion circuit; and

when the output current is greater than a specified current threshold, obtaining a dynamic virtual impedance and a dynamic virtual impedance according to a preset function.

11. The method according to any one of claims 2 to 10, wherein the controlling, based on the contention reactive power, the conversion circuit to output the first reactive power comprises:

controlling an amplitude of an inner potential based on the contention reactive power, wherein the amplitude of the inner potential is an amplitude of a voltage of an inner potential vector provided by the power converter to support a voltage of the electric power system; and controlling a voltage of the inner potential of the power converter based on the amplitude of the inner potential, a phase of the inner potential, and a frequency of the inner potential, to enable the conversion circuit to output the first reactive power.

12. A power converter, comprising a conversion circuit and a controller, wherein an input end of the conversion circuit is configured to connect a direct current source, and an output end is configured to connect an electric power system;

the power converter is configured to convert direct current electric energy into alternating current electric energy under control of the control apparatus; and the controller is configured to:

obtain an output voltage at the output end of the conversion circuit; and when an amplitude of the output voltage is greater than an upper-limit voltage of a specified voltage range or less than a lower-limit voltage of the specified voltage range, control the conversion circuit to output a first reactive power, wherein the upper-limit voltage is a maximum voltage value within the specified voltage range, the lower-limit voltage is a minimum voltage value within the specified voltage range, and the first reactive power is a reactive power that enables the amplitude of the output voltage at the output end of the conversion circuit to be within the specified voltage range.

13. The power converter according to claim 12, wherein the controller is specifically configured to: calculate an upper-limit reactive power based on the upper-limit voltage, and calculate a lower-limit reactive power based on the lower-limit voltage;

select a contention reactive power based on a relationship between the upper-limit reactive power, the lower-limit reactive power, and an upper-level scheduled reactive power, wherein the contention reactive power is one of the upper-limit reactive power, the lower-limit reactive power, and the upper-level scheduled reactive power; and

control, based on the contention reactive power, the conversion circuit to output the first reactive power.

14. The power converter according to claim 13, wherein that the controller calculates an upper-limit reactive power based on the upper-limit voltage comprises:

when the amplitude of the output voltage is greater than the upper-limit voltage, calculating a second reactive power based on the upper-limit voltage; and limiting an amplitude of a voltage corresponding to the second reactive power, and calculating the upper-limit reactive power.

15. The power converter according to claim 13, wherein that the controller calculates a lower-limit reactive power based on the lower-limit voltage comprises:

when the amplitude of the output voltage is less than the lower-limit voltage, calculating a third reactive power based on the lower-limit voltage; and limiting an amplitude of a voltage corresponding to the third reactive power, and calculating the lower-limit reactive power.

10

```
                    ┌─────────────────┐
                    │ External power  │
                    │  system 300     │
                    └────────┬────────┘
                             │
                             ▼
                    ┌─────────────────┐
                    │ Power converter │
                    │      200        │
                    └────────┬────────┘
                             │
┌─────────────────┐         ▼
│ Electric power  │─────────┼──────────────────────────────
│  system 100     │         │
└─────────────────┘         │
                            │
                   ┌────────┴────────┐
                   │                 │
                   │      Load       │
                   │                 │
                   └─────────────────┘
```

FIG. 1

```
┌──────────────────────────────────────────────────────────┐
│                  Power converter 200                       │
│                                                            │
│  ──────────────────┐                                       │
│                    │                                       │
│                    ▼                                       │
│        ┌───────────────────┐      ┌───────────────────┐    │
│        │ Conversion circuit│◄────►│    Controller     │    │
│        │       210         │      │       220         │    │
│        └───────────────────┘      └───────────────────┘    │
│                    │                                       │
│  ◄─────────────────┘                                       │
│                                                            │
└──────────────────────────────────────────────────────────┘
```

FIG. 2

$|U|$                       $|U|$

$U_{up}^{ref}$ → First voltage processing unit 221     Second voltage processing unit 222 ← $U_{dn}^{ref}$

$U_{up}^{ref}$              $U_{dn}^{ref}$

First voltage control unit 223        Second voltage control unit 224

$Q_{up}^{ref}$

$Q_0^{ref}$ → First power contention unit 225

$Q_{up}^{ref}$ or $Q_0^{ref}$            $Q_{dn}^{ref}$

Second power contention unit 226

$Q_0^{ref}$ or $Q_{up}^{ref}$ or $Q_{dn}^{ref}$

Power control unit 227

$|V|$

FIG. 3

FIG. 4

FIG. 5

FIG. 6

FIG. 7

## INTERNATIONAL SEARCH REPORT

| International application No. |
|---|
| **PCT/CN2023/134802** |

### A.    CLASSIFICATION OF SUBJECT MATTER

H02J3/50(2006.01)i;  H02J3/16(2006.01)i

According to International Patent Classification (IPC) or to both national classification and IPC

### B.    FIELDS SEARCHED

Minimum documentation searched (classification system followed by classification symbols)

IPC：H02J

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 并网, 电网, 构网, 变换器, 逆变, 电压上限, 电压下限, 无功, 竞争, 比较, grid, network, converter, inverter, voltage, upper limit, lower limit, reactive power, compete, competition, compare

### C.    DOCUMENTS CONSIDERED TO BE RELEVANT

| Category* | Citation of document, with indication, where appropriate, of the relevant passages | Relevant to claim No. |
|---|---|---|
| X | CN 108336743 A (STATE GRID SHAANXI ELECTRIC POWER CO., LTD., ELECTRIC POWER RESEARCH INSTITUTE et al.) 27 July 2018 (2018-07-27) <br> description, paragraphs 6 and 44-65, and figures 1a-8c | 1, 7, 12 |
| X | CN 105305454 A (STATE GRID SHANXI ELECTRIC POWER CO., LTD., ELECTRIC POWER RESEARCH INSTITUTE et al.) 03 February 2016 (2016-02-03) <br> description, paragraphs 3 and 53-96, and figures 1-6 | 1, 7, 12 |
| PX | CN 116247751 A (HUAWEI DIGITAL ENERGY TECHNOLOGY CO., LTD.) 09 June 2023 (2023-06-09) <br> claims 1-15 | 1-15 |
| A | CN 113964876 A (NANTONG UNIVERSITY) 21 January 2022 (2022-01-21) <br> entire document | 1-15 |
| A | JP 2018180574 A (FUJI ELECTRIC CO., LTD.) 15 November 2018 (2018-11-15) <br> entire document | 1-15 |

☐ Further documents are listed in the continuation of Box C.          ☑ See patent family annex.

| | |
|---|---|
| *      Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **09 January 2024** | **15 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134802**

| Patent document cited in search report | | | Publication date (day/month/year) | Patent family member(s) | | | Publication date (day/month/year) |
|---|---|---|---|---|---|---|---|
| CN | 108336743 | A | 27 July 2018 | CN | 108336743 | B | 31 January 2020 |
| CN | 105305454 | A | 03 February 2016 | CN | 105305454 | B | 26 October 2018 |
| CN | 116247751 | A | 09 June 2023 | None | | | |
| CN | 113964876 | A | 21 January 2022 | CN | 113964876 | B | 22 July 2022 |
| JP | 2018180574 | A | 15 November 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211582365